# EUROPÄISCHE PATENTANMELDUNG

(11) **EP 1 271 348 A1**
(43) Veröffentlichungstag der Anmeldung: **02.01.2003**
(21) Anmeldenummer: 01115829.2
(22) Anmeldetag: 28.06.2001
(51) Int. Cl.: G06F 17/30, G06F 9/44

(54) **Verfahren zur Online-Transformation von Massendaten**

(71) Anmelder: SIEMENS AKTIENGESELLSCHAFT, 80333 München (DE)
(72) Erfinder: Hekele, Bernd, 83620 Vagen (DE); Zeiner, Johann, 85221 Dachau (DE); Zengerle, Ricarda, 81371 München (DE)

(57) **Zusammenfassung**

Beim Upgrade von Vermittlungsanlagen (A) auf eine neue Softwareversion sind die zum Steuern der Anlage (A) notwendigen Daten auf ein Format umzusetzen, das in der neuen Version ablauffähig ist. Bei den Daten handelt es sich um Massendaten. Die Umsetzung dieser Daten erfordert mit den bekannten Methoden lange Laufzeiten und kann zu Einschränkungen im Betrieb und reduzierter Funktionalität für die Teilnehmer führen. Bekannte Verfahren konvertieren die Daten zunächst in die Eingabesprache und verarbeiten diese anschließend. Erfindungsgemäß wird die vorhandene Redundanz der Anlage (A) ausgenutzt, indem auf einem der redundanten Systeme (A₁) der Wirkbetrieb ohne Einschränkungen fortgesetzt wird, während ein zweites der redundanten Systeme (A₂) mit der neuen Softwareversion ausgerüstet wird und über einen Kommunikationskanal die Daten von System (A₁) anfordert, transformiert, ggf. um Planungsdaten ergänzt und im Datenbereich (DBₙₑᵤ) des Systems (A₂) ablegt. Nach vollständiger und erfolgreicher Datenübernahme und -transformation wird der Wirkbetrieb wird von System (A₁) auf System (A₂) umgeschaltet, und die Redundanz der Anlage (A) wird wiederhergestellt, indem die Trennung der Systeme (A₁) und (A₂) aufgehoben wird und mit Hilfe bekannter Mechanismen System (A₂) auf System (A₁) kopiert wird.

## Beschreibung

Beim Upgrade von Vermittlungsanlagen auf eine neue Softwareversion sind die zum Steuern der Anlage notwendigen Daten auf ein Format umzusetzen, das in der neuen Version ablauffähig ist. Bei den Daten handelt es sich um Massendaten ggf. Millionen von Datensätzen da z.B. pro Teilnehmer oder Verbindungsleitung ein Datensatz vorhanden ist.

Die Umsetzung dieser Daten erfordert mit den bekannten Methoden eine Laufzeit von mehreren Tagen oder Wochen und kann zu Einschränkungen im Betrieb und zu zeitweise reduzierter Funktionalität für die Teilnehmer führen.

Bei einem bekannten Verfahren zur Transformation der Daten werden die Daten zunächst in die Eingabesprache zurückübersetzt. Dann werden die in Eingabesprache vorliegenden Daten außerhalb der Vermittlungsanlage in eine für die neue Softwareversion geeignete Form umgesetzt. Anschließend werden die umgesetzten, in Eingabesprache vorliegenden Daten in die neue Softwareversion eingearbeitet. Ein gravierender Nachteil dieses Verfahrens sind die extrem langen Laufzeiten der Umsetzung der Datenbanken in die Eingabesprache und zurück und die damit verbundenen Einschränkungen. Beispielsweise ist es nicht möglich, während dieses Vorgangs Änderungen an den Teilnehmerdaten Vergabe neuer Dienste, Einrichtung neuer Teilnehmer vorzunehmen.

Die der vorliegenden Erfindung zugrundeliegende Aufgabe besteht darin, ein Verfahren zur Transformation von Massendaten anzugeben, welches die Nachteile der bekannten Verfahren vermeidet.

Diese Aufgabe wird durch die Merkmale des Patentanspruchs 1 gelöst.

Ein wesentlicher Vorteil des erfindungsgemäßen Verfahrens besteht darin, dass durch Ausnutzung der redundanten Architektur der datenverarbeitenden Anlage eine externe Verarbeitung der Daten nicht erforderlich ist und somit der zeitaufwendige Prozess der Konvertierung in eine für den Bediener einfach interpretierbare Form die Eingabesprache sowie die Übertragung an das externe System und zurück entfallen.

Ein weiterer wichtiger Vorteil liegt darin begründet, dass die Daten des datenverarbeitenden Systems nur während einer kurzen Zeit fünfter Schritt einer Veränderungssperre unterliegen.

Vorteilhaft ist außerdem der Aufbau der Daten für die neue Softwareversion im zweiten System. Falls die Transformation der Daten fehlschlägt, kann der ganze Vorgang abgebrochen und der reguläre Betrieb der datenverarbeitenden Anlage fortgesetzt werden, nachdem Software und Daten vom ersten auf das zweite System kopiert und so die Redundanz wiederhergestellt wurde.

Weitere vorteilhafte Ausgestaltungen der Erfindung sind den Unteransprüchen zu entnehmen.

Im folgenden wird das erfindungsgemäße Verfahren einer Zeichnung näher erläutert.

Die Figur zeigt eine schematische Darstellung des Ablaufs des erfindungsgemäßen Verfahrens.

Die redundant ausgelegten Systeme A₁, A₂ der datenverarbeitenden Anlage A - in einem Ausführungsbeispiel eine Vermittlungsanlage - werden zunächst in zwei selbständige, nichtredundante Systeme A₁ und A₂ getrennt. Nach dieser Trennung sind in A₁ und A₂ sowohl Software als auch alle Daten der Datenbank DB der datenverarbeitenden Anlage A vorhanden, so dass sowohl A₁ als auch A₂ die Funktion der datenverarbeitenden Anlage A erfüllen können.

Eines der beiden Systeme A₁, A₂ - hier A₁ - wird ausgewählt, die Funktion der datenverarbeitenden Anlage A fortzuführen. Durch das System A₁ wird der ungestörte Betrieb der datenverarbeitenden Anlage A gewährleistet, während gleichzeitig im System A₂ Veränderungen vorgenommen werden können, ohne dass diese den Betrieb des Systems A₁ beeinträchtigen.

Beide Systeme A₁, A₂ beinhalten ein Datenbank-Managementsystem DBMS, über das alle Zugriffe auf die Datenbanken DB und DBₙₑᵤ erfolgen. Zwischen den beiden Systemen A₁, A₂ wird ein Kommunikationskanal geschaltet, der zur Übertragung von Daten und Steuerungsinformationen zwischen den beiden Systemen verwendet wird.

Für die Übernahme der Daten aus dem System A₁ mit der alten Softwareversion in das System A₂ mit der neuen Softwareversion werden, abhängig von der Art der jeweiligen Daten, zwei verschiedene Verfahren benötigt.

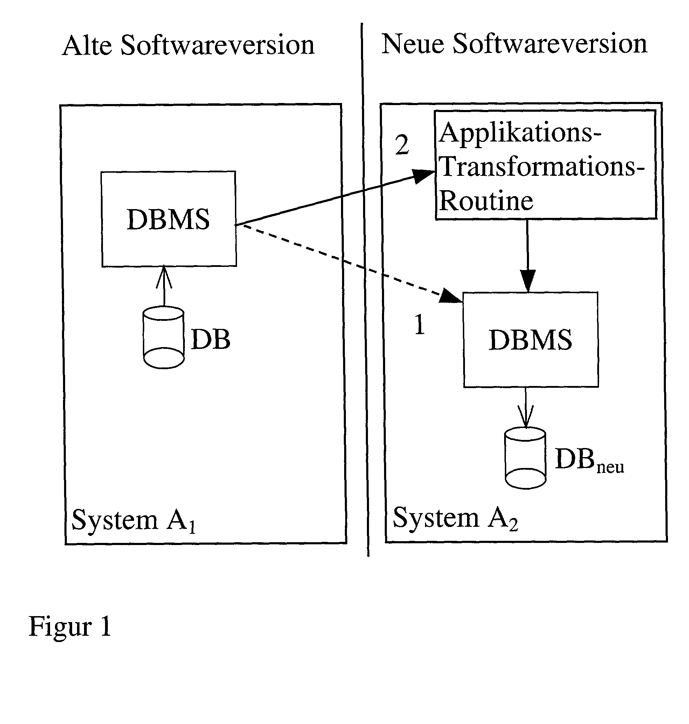

Ein erster Teil der Daten wird in Struktur und Inhalt unverändert aus der mit der alten Softwareversion in System A₁ benutzbaren Datenbank DB in die mit der neuen Softwareversion in System A₂ benutzbare Datenbank DBₙₑᵤ übernommen. Dazu werden die Daten durch DBMS in A₂ direkt bei DBMS in A₁ angefordert und in die Datenbank DBₙₑᵤ eingearbeitet. Dieser Vorgang ist in Figur 1 mit Ziffer 1 bezeichnet.

Ein zweiter, größerer Teil der Daten z.B. Daten, deren Format/Struktur sich mit der Änderung der Softwareversion ändert, oder Daten, die um Planungsdaten ergänzt werden, oder Daten, die in der neuen Softwareversion nicht erforderlich sind - wird vor der Einarbeitung in die Datenbank DBₙₑᵤ modifiziert. Dazu fordern die im regulären Betrieb der neuen Softwareversion die entsprechenden Daten verarbeitenden Softwarebestandteile Applikationen die ihnen zugeordneten Daten bei DBMS in A₁ an und transformieren diese. Dieser Vorgang ist in Figur 1 mit Ziffer 2 bezeichnet. Anschließend werden die Daten zur Einarbeitung in DBₙₑᵤ an DBMS in A₂ übergeben. Die Applikationen werden zu diesem Zweck mit der Fähigkeit ausgestattet, die Daten aus einer früheren Softwareversion zu übernehmen und zu transformieren.

Um den Datenbestand der datenverarbeitenden Anlage A so aktuell wie möglich zu halten, werden während der vorstehend beschriebenen Übernahme und Transformation der Daten aus System A₁ mit der alten Softwareversion in System A₂ mit der neuen Softwareversion verändernde Zugriffe auf die Datenbank DB des Systems A₁ zugelassen und in einer Aufzeichnungsdatei vermerkt. Nach Abschluss der Übernahme und Transformation wird der neueste, nur in der Datenbank DB des Systems A₁ vorliegende Stand mit dem beschriebenen Verfahren in die Datenbank DBₙₑᵤ des Systems A₂ eingearbeitet, indem nur die in der Aufzeichnungsdatei verzeichneten Daten erneut übernommen und transformiert werden, wobei dann die Datenbank DB des Systems A₁ für verändernde Zugriffe gesperrt wird.

Nach erfolgreichem Abschluss der Datenübernahme und -transformation aus der Datenbank DB in die Datenbank DBₙₑᵤ wird der Kommunikationskanal zwischen den Systemen A₁ und A₂ geschlossen, und System A₂ nimmt den Wirkbetrieb auf, während gleichzeitig System A₁ den Wirkbetrieb einstellt, d.h. der Wirkbetrieb wird von System A₁ auf System A₂ umgeschaltet.

Aus Sicherheitsgründen kann an dieser Stelle ein Probebetrieb mit System A₂ und der neuen Softwareversion und den transformierten Daten stattfinden, während System A₁ als Rückfallsystem - jedoch nicht mehr mit den aktuellsten Daten zur Verfügung steht.

Nach Abschluss des Probebetriebs oder direkt nach Aufnahme des Wirkbetriebs durch System A₂ - werden sowohl Software als auch Daten von System A₂ nach System A₁ kopiert, um die Redundanz der datenverarbeitenden Anlage A wiederherzustellen. Dazu kommen bekannte Methoden zum Einsatz, die nicht Gegenstand dieser Erfindung sind.

## Patentansprüche

1. Verfahren zur Online-Transformation von Massendaten (DB) beim Softwarewechsel einer mit redundanten Systemen (A₁, A₂) ausgestatteten datenverarbeitenden Anlage (A),
- demgemäss in einem ersten Schritt ein erstes der redundanten Systeme (A₁) die bisherige Funktion der datenverarbeitenden Anlage (A) mit den vorliegenden Massendaten (DB) und der bisherigen Softwareversion allein übernimmt,
- demgemäss in einem zweiten Schritt ein zweites der redundanten Systeme (A₂) mit der neuen Softwareversion, zunächst jedoch ohne Daten, ausgerüstet wird,
- demgemäss in einem dritten Schritt ein Kommunikationsweg zwischen dem ersten System (A₁) und dem zweiten System (A₂) eingerichtet wird,
- demgemäss in einem vierten Schritt durch einen in die neue Softwareversion integrierten, auf dem zweiten System (A₂) ablaufenden Prozess die Massendaten (DB) über den Kommunikationskanal aus dem ersten System (A₁) extrahiert, auf dem zweiten System (A₂) für die Benutzung mit der neuen Softwareversion transformiert und in einem entsprechenden Datenbereich (DBₙₑᵤ) des zweiten Systems (A₂) ablegt werden, wobei Änderungen an den Daten (DB) des ersten Systems (A₁) weiterhin zulässig sind und in einer Aufzeichnungsdatei vermerkt werden,
- demgemäss in einem fünften Schritt während des vierten Schrittes geänderte Daten gemäß der Aufzeichnungsdatei erneut extrahiert, transformiert und abgelegt werden, wobei während des fünften Schrittes Änderungen an den Daten des ersten Systems (A₁) nicht zugelassen werden,
- demgemäss in einem sechsten Schritt die normale Funktion der datenverarbeitenden Anlage A wiederhergestellt wird, indem zunächst der Betrieb mit dem zweiten System (A₂) aufgenommen wird und anschließend Software und Daten (DBₙₑᵤ) des zweiten Systems (A₂) auf das erste System (A₁) übertragen werden.

2. Verfahren nach Anspruch 1,
**dadurch gekennzeichnet,**
**dass** für den Betrieb der datenverarbeitenden Anlage A mit der neuen Softwareversion erforderliche, im ersten System (A₁) nicht vorhandene Daten im vierten Schritt durch den auf dem zweiten System (A₂) ablaufenden Prozess anhand von Vorgaben, z.B. Planungsdaten, generiert und in einem entsprechenden Datenbereich (DBₙₑᵤ) des zweiten Systems (A₂) ablegt werden.

3. Verfahren nach Anspruch 1,
**dadurch gekennzeichnet,**
**dass** für den Betrieb der datenverarbeitenden Anlage A mit der neuen Softwareversion nicht länger erforderliche, im ersten System (A₁) vorhandene Daten im vierten Schritt durch den auf dem zweiten System (A₂) ablaufenden Prozess anhand von Vorgaben, z.B. Planungsdaten, verworfen und in einen entsprechenden Datenbereich (DBₙₑᵤ) des zweiten Systems (A₂) nicht übernommen werden.

4. Verfahren nach einem der Ansprüche 1 bis 3,
**dadurch gekennzeichnet,**
**dass** der Softwarewechsel einschließlich der Online-Transformation gemäß der Schritte 1 bis 6 durch Fernsteuerung gesteuert wird.

5. Verfahren nach einem der Ansprüche 1 bis 4,
**dadurch gekennzeichnet,**
**dass** die datenverarbeitende Anlage (A) eine Vermittlungsanlage ist.
